# EUROPEAN PATENT APPLICATION

(11) **EP 4 671 983 A1**
(43) Date of publication of application: **31.12.2025**
(21) Application number: 25176023.7
(22) Date of filing: 13.05.2025
(51) Int. Cl.: G06F 9/48, G06F 8/41, G06F 9/50, G06F 9/54

(54) **SYSTEMS AND METHODS FOR COMPUTATION AND COMMUNICATION USING PROCESSING DEVICES**

(30) Priority: 27.06.2024 US 202463665154 P; 05.12.2024 US 202418969992
(71) Applicant: Samsung Electronics Co., Ltd., Suwon-si, Gyeonggi-do 16677 (KR)
(72) Inventor: MADDUMA PATABANDI, Tharindu Rusira Kumara, San Jose, CA, 95134 (US); PITCHUMANI, Rekha, San Jose, CA, 95134 (US)
(74) Representative: Kuhnen & Wacker Patent- und Rechtsanwaltsbüro PartG mbB

(57) **Abstract**

Systems and methods for computation and communication using processing devices are disclosed. The system includes a first processing device and a computing device including a processor and a memory. The memory stores instructions that, when executed by the processor, cause the processor to: identify a source program; identify a first computation identified in the source program; identify a first communication operation associated with the first computation; generate a data structure based on the first computation and the first communication operation; generate a machine-readable code based on the data structure; and transmit the machine-readable code for performing at least one of the first computation or the first communication operation by the first processing device.

## Description

### CROSS-REFERENCE TO RELATED APPLICATION(S)FIELD

One or more aspects of embodiments according to the present disclosure relate to processing devices, and more particularly to performing computation and communication via the processing devices.

### BACKGROUND

Applications may perform computations on large amounts of data. As such types of computations increase, it may be desirable to employ efficient and cost-effective data processing solutions.

The above information disclosed in this Background section is only for enhancement of understanding of the background of the present disclosure, and therefore, it may contain information that does not form prior art.

### SUMMARY

One or more embodiments are directed to a system comprising: a first processing device; a computing device including a processor and a memory, wherein the memory stores instructions that, when executed by the processor, cause the processor to: identify a source program; identify a first computation identified in the source program; identify a first communication operation associated with the first computation; generate a data structure based on the first computation and the first communication operation; generate a machine-readable code based on the data structure; and transmit the machine-readable code for performing at least one of the first computation or the first communication operation by the first processing device.

In some embodiments, the first communication operation includes at least one of receiving a result of the first computation, sending the result of the first computation, or merging the result of the first computation with other data.

In some embodiments, the data structure includes a representation of the source program generated by a compiler.

In some embodiments, the data structure is represented as a graph.

In some embodiments, the source program is represented as a graph, and the instructions further cause the processor to: partition the graph into a first work group and a second work group, wherein the first computation is included in the first work group; and assign the first computation to the first processing device.

In some embodiments, the instructions that cause the processor to partition the graph include instructions that cause the processor to identify a communication overhead associated with at least the first work group.

In some embodiments, the system further comprises a second processing device, wherein the instructions further cause the processor to: identify the second processing device, wherein the first communication operation includes an operation for receiving communication from the first processing device about the first communication operation.

In some embodiments, the instructions further cause the processor to: identify configuration information associated with the first processing device; and assign the first computation to the first processing device based on the configuration information.

In some embodiments, the configuration information includes at least one of a number of processing elements, connection topology of the processing elements, interconnect type, interconnect bandwidth, or memory capacity associated with the first processing device.

In some embodiments, the data structure identifies at least one of a communication dependency or synchronization point.

One or more embodiments of the present disclosure are directed to a method comprising: identifying a source program; identifying a first computation identified in the source program; identifying a first communication operation associated with the first computation; generating a data structure based on the first computation and the first communication operation; generating a machine-readable code based on the data structure; and transmitting the machine-readable code for performing at least one of the first computation or the first communication operation by a first processing device.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a schematic block diagram of a system for distributed computation and communication according to one or more embodiments;
FIG. 2 depicts a block diagram of a compiler according to one or more embodiments;
FIG. 3 depicts an example input operation graph representing an input source program, and an example communication-aware operation graph representing a communication-aware program intermediate representation data structure according to one or more embodiments;
FIG. 4 depicts an example communication-aware operation graph that may be generated by a compiler according to one or more embodiments;
FIG. 5 depicts another example communication-aware operation graph that may be generated by a compiler according to one or more embodiments; and
FIG. 6 depicts a flow diagram of a process for generating a communication-aware program intermediate representation data structure and associated executable code according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

The use of artificial intelligence (AI) has increased dramatically over the last few years. AI has become commonly used in domains such as image classification, speech recognition, media analytics, heath care, autonomous machines, smart assistants, and the like. Using AI often invokes the use of large datasets (e.g., data from databases, sensors, images, and the like) and the use of advanced algorithms that may similarly call for high performance computing.

Large computations may benefit from parallel computing that may be performed by distributing parts of the computations to different processing devices (also referred to as nodes). One or more of the processing devices may engage in collective communication to communicate results and/or other knowledge about the computations to one or more other processing devices for solving a bigger problem. The processing device may synchronize information that is maintained locally based on the received communication.

For certain types of communications, such as those with well-defined data flow and communication patterns, the synchronization or communication operations may occur via collective communication (CC) kernels that may be statically scheduled by a host computing device during compile time. The generating of the CC kernels may be separate or orthogonal from the generating of compute kernels that perform the computations. The generating of the compute kernels may therefore occur without information about the interaction between the processing devices.

In some systems, the generating and scheduling of the compute and CC kernels may be based on a top level description of a parallelization strategy by a programmer. The parallelization strategy may describe which processing devices are to perform which computations, and/or when they are to communicate with one another for providing knowledge about the computations. The communication operations may be implemented using software libraries (e.g., a collective communication library (CCL)) that are outside of a main software stack that generates the compute kernels. In this regard, a runtime scheduler executed by the host computing engine may insert different CCL or CC kernels in-between the compute kernels to enable communication and synchronization of information (e.g., computation results) between the processing devices. The scheduler may wait for one or more compute kernels to finish execution before inserting a CC kernel to enable the communication and synchronization of results of the computations.

The generating of a parallelization strategy by a programmer may be challenging for complex workloads. For complex workloads, the communication and computation requirements may not be straightforward, and the resulting parallelization strategy may not be performance optimal.

The manual determination of the parallelization strategy may also be a challenge to the programmer when work is to be allocated to heterogenous processing devices that have different processing capabilities. When work is distributed to uniform processing devices with uniform processing capabilities, the programmer may allocate the work equally to the various processing devices. However, when work is distributed to heterogenous processing devices with varying compute capabilities, the programmer may need to take into account the compute capabilities of the nodes for different communication patterns, making the work allocation harder.

The generating of the CC kernels may also often be template based. The template may provide a blueprint on how to perform certain types of data communication operations in a uniform cluster of nodes. When communication is to be scheduled for heterogeneous processing devices, the templates may need to be modified. Development of new templates may be costly.

One or more embodiments of the present disclosure are directed to systems and methods for distributed or parallel computations that combine computation and communication into a unified intermediate representation. The unified intermediate representation may be generated by a compiler based on compute-communication trade-offs.

In some embodiments, the compiler includes a compute analyzer and a communication scheduler. The compute analyzer may be configured to analyze a source program and perform compiler analysis (e.g., dependency analysis, data-flow analysis) of the program for identifying internal computer optimization opportunities for the computations identified in the source program. The compiler may output an optimized computation graph based on the analysis.

The communication scheduler may be configured to analyze the computations of the source program, and derive communication strategy (e.g., optimized or preferred communication strategy) (also referred to as a communication map) based on configuration and mesh information of the processing devices considered for the computations. The communication strategy may partition the workload (e.g., a total number of computations) described by the source program, and assign one or more portions of the workload (e.g., portions of the computations) to one or more processing devices. The communication strategy may identify dependencies and/or synchronization points of the assigned computations for identifying communication flow, timing, and/or the like. In some embodiments, the communication strategy may aim to reduce inter-node communications and provide operator granularity between the communications. In some embodiments, the operator granularity includes the amount of work assigned to each compute node between communication calls. In some embodiments, the communication strategy provides an optimal or preferred operator granularity in a process similar to the determining of an optimal computation-communication trade-off for a given computation/compute graph while adhering to its data and control dependencies. A communication-aware compiler may use both the program analysis and the platform information for such computation-communication partitioning.

In some embodiments, the optimized computation graph and/or instructions, and the optimized communication map and/or instructions are intermixed for producing a final output. The final output may be an optimized program data structure (also referred to as a communication-aware program intermediate representation (Comm-IR)) that includes computation instructions as well as communication primitives that express data movement between two or more processing devices.

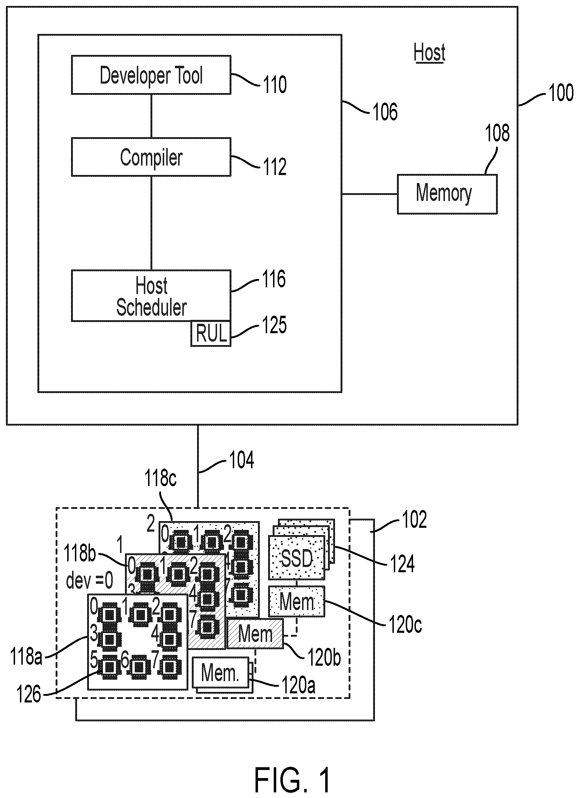

FIG. 1 depicts a schematic block diagram of a system for distributed computation and communication according to one or more embodiments. In some embodiments, the system includes a host computing device ("host device") 100 coupled to one or more processing servers 102 over one or more data communications links 104. The data communications links 104 may facilitate communications (e.g., using a connector and a protocol) between the host device 100 and the one or more processing servers 102. In some embodiments, the data communication links 104 may facilitate the exchange of computation requests and responses between the host device 100 and the processing servers 102. In some embodiments, the data communication links 104 (e.g., the connector and the protocol thereof) may include (or may conform to) the Compute Express Link (CXL) protocol, although embodiments are not limited thereto. For example, in addition or in lieu of CXL, the data communication links 104 may use other protocols such as Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Universal Serial Bus (USB), Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like.

The host device 100 may include, without limitation, a processor 106 and memory 108. The processor 106 may be a processing circuit such as, for example, a general purpose processor or a central processing unit (CPU) core of the host device 100. The processor 106 may be connected to other components via an address bus, a control bus, a data bus, and/or the like. The memory 108 may be a primary memory of the host device 100. For example, in some embodiments, the memory 108 may include (or may be) volatile memory (e.g., a dynamic random-access memory (DRAM)), non-volatile memory (e.g., read-only memory (ROM)), and/or other types of memory, such as NAND flash memory). In some embodiments, the memory 108 stores computer program instructions and/or data for generating and scheduling computation and communication instructions for the processing servers 102.

In some embodiments, the processor 106 is configured to execute an application (e.g., an AI or machine learning (ML) application) that may require execution of the one or more processing servers 102 due to, for example, high computational requirements. A development tool 110 such as an AI framework or interface may be employed (e.g., by a human developer) to generate a source program that includes a description of high-level computations and/or models of the application (also referred to as a workload). The workload described by the source program may be represented as a high-level operation graph such as, for example, a computation graph, a data-flow graph, or an abstract syntax tree (AST).

A compiler 112 may take the source program and perform analysis of the workload described in the program. The analysis may include identifying optimizations for the computations. The identified optimizations may be standard optimizations applied by a typical complier as will be appreciated by a person of skill in the art. An optimized computation graph may be output based on the analysis.

In some embodiments, the compiler 112 identifies a communication strategy for one or more of the computation requirements. The communication strategy may include identification of processing devices in the processor server(s) 102 that are to perform the computations, data that is to be communicated between the processing devices, where (e.g., to which processing device) to communicate the data, how to communicate the data, and/or the like. In one embodiment, these determinations are based on data included in the source program 203 or determined by the system (e.g., via a communication scheduler) based on analysis of the program as described in further detail below.

The communication strategy may be generated for one or more (e.g., each) computation or operation identified by the compiler 112. The compiler 112 may generate an optimized communication map including the communication strategy for the one or more computations. Generating the communication map may involve estimating the amount of computation to be performed, analyzing available computation/memory resources and allocating these resources to one or more computations that maximizes/minimizes a given objective function such as communication cost/bandwidth utilization, and/or the like.

In some embodiments, the compiler 112 generates a data structure (e.g., a communication-aware program intermediate representation) of the source program based on the optimized computation graph and the optimized communication map. The intermediate representation may include the computations of the optimized computation graph along with one or more communication primitives or instructions to carry out the identified communication strategies. In this regard, the intermediate representation may intermix compute and communication instructions for executing the workload described by the source program.

The compiler 112 may take the intermediate representation and generate a machine-readable code (e.g., a communication enabled binary code) of the compute and communication instructions in the intermediate representation. The communication enabled binary code may be provided to a host runtime scheduler 116 that is configured to distribute the code to the one or more processing servers 102. In some embodiments, the host scheduler 116 interacts with a runtime unification layer 125 for distributing or routing one or more portions of the binary code to an appropriate runtime software or driver of the processing server 102. The runtime unification layer 125 may provide an interface that the scheduler may use to interface with the processing servers 102 in a uniform manner. In this manner, complexities of the communication that may arise due to different configurations of the processing servers 102 may be hidden or abstracted out of the scheduler 116.

The processing server 102 may take the form of a solid state drive (SSD), persistent memory, and/or the like. The processing server 102 may include one or more processing devices 118a-118c (collectively referenced as 118) for providing computational capabilities to the processing server. The processing device 118 may also be referred to as a processor, processing circuitry, and/or similar terms used herein interchangeably.

The processing devices 118 that may be of the same or different type. For example, processing device 118a may be a central processing unit (CPU) and processing device 118b may be a graphics processing unit (GPU), although embodiments are not limited thereto.

The processing device 118 may have one or more processing elements 126, memory 120a-120c (collectively referenced as 120), and/or storage device 124. Compute and/or communication capabilities of the processing device 118 may depend on the number and/or type of processing elements 126, memory 120, and/or storage device 124. One or more portions of a workload may be assigned to a processing device 118 based on the configuration or mesh information of the various processing devices 118.

In some embodiments, the processing element 126 of a processing device 118 may be embodied in a number of different ways. For example, the processing element 126 may be embodied as one or more complex programmable logic devices (CPLDs), microprocessors, multi-core processors, coprocessing entities, application-specific instruction-set processors (ASIPs), microcontrollers, and/or controllers. Further, the processing element 126 may be embodied as one or more other processing devices or circuitry. The term circuitry may refer to an entirely hardware embodiment or a combination of hardware and computer program products. Thus, the processing element 126 may be embodied as integrated circuits, application specific integrated circuits (ASICs), field programmable gate arrays (FPGAs), programmable logic arrays (PLAs), hardware accelerators, other circuitry, and/or the like.

The memory 120 associated with the processing device 118 may be one or more of volatile memory (e.g., RAM, DRAM, HBM, and the like) and/or non-volatile memory (e.g., ROM). In some embodiments, one or more first processing elements 126 of a processing device 118 may be associated with a first memory, and one or more second processing elements of the processing device may be associated with a second memory. The first and second memory may function as non-uniform memory access (NUMA) memory banks.

The storage device 124 may take the form of a solid-state drive (SSD) although not limited thereto. For example, the storage device 124 may take the form of a solid state card (SSC), solid state component (SSM), enterprise flash drive, magnetic tape, or any other non-transitory magnetic medium, and/or the like. In some embodiments, the memory 120 and/or storage device 124 may store results of the computations assigned to the processing device 118. The memory 120 and/or storage device 124 may be accessed, for example, to store or retrieve results of the computations, as disk storage (e.g., via CXL.io) at a block level of granularity, or as a device-attached memory (e.g., via CXL.mem or CXL.cache) at a byte level granularity.

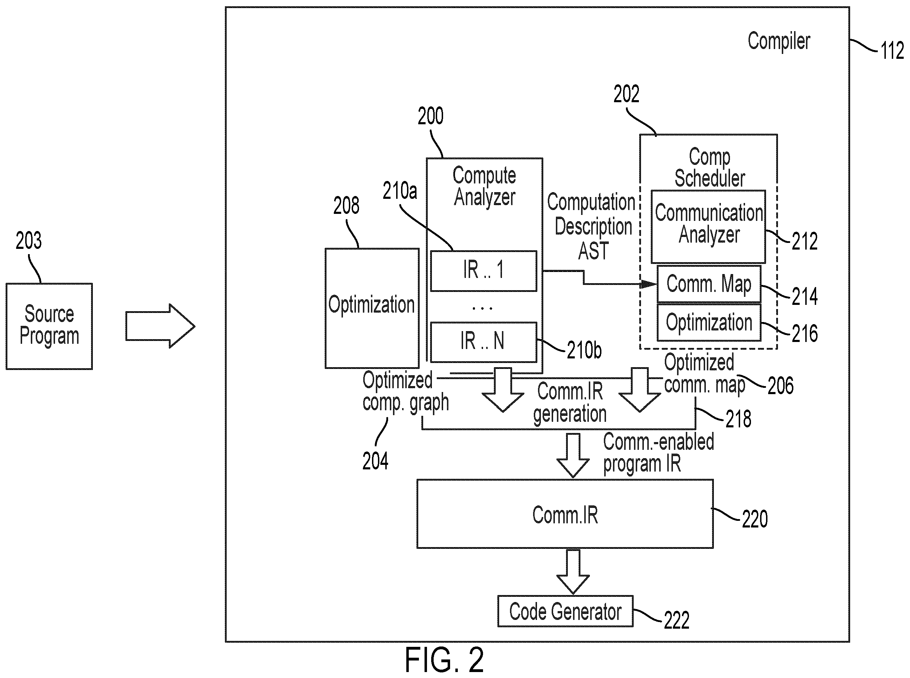

FIG. 2 depicts a block diagram of the compiler 112 according to one or more embodiments. The compiler 112 may include a compute analyzer 200 and a communication scheduler 202. In some embodiments, a source program 203 generated by the developer tool 110 may be provided to the compute analyzer 200 and the communication scheduler 202 for respectively generating an optimized computation graph 204 and an optimized communication map 206. The source program 204 may be represented as a high level operation graph such as, for example, an abstract syntax tree (AST).

In some embodiments, the compute analyzer 200 is configured to perform analysis of the workload of the program including, for example, dependency analysis, data-flow analysis, and/or other types of analysis that compilers may undertake in generating a compiled code. The analysis of the computation requirements may include invoking an optimization engine 208 for determining compute optimizations to improve data locality, vectorization, and/or the like. The compute analyzer 200 may identify one or more intermediate representations 210a-210b (collectively referenced as 210) based on the optimized source program 204, and output the intermediate representations as an optimized computation graph.

In some embodiments, the communication scheduler 202 is configured to identify a communication strategy for one or more of the computation requirements. In some embodiments, the communication strategy is determined based on data included in the source program 203. For example, if the source program 203 contains user/programmer defined communication directives or requirements (e.g., communication libraries, such as CCL), the communication schedule 202 may honor the user requirement and generate the communication strategy based on such requirement.

In some embodiments, the communication scheduler 202 is configured to determine the communication strategy based on analysis of the source program 203. In this regard, the communication scheduler includes a communication analyzer 212, communication map generator 214, and an optimization engine 216. The communication analyzer 212 may be configured to parse the source program 204 (e.g., the AST) and identify the device configuration and mesh description (used interchangeably herein) from the processing server 102. The configuration and mesh information may include, for example, configuration of the processing elements 118, memory 120, and/or storage device 124. For example, the configuration and mesh information for one or more of the processing devices 118 may include the number of processing elements 126 in the processing device, the connection topology of the processing elements, the interconnect type and bandwidth of the processing elements, capacity and/or latency of the associated memory 120, and/or the like.

The communication map generator 214 may be configured to partition the workload based on the parsed source program 204 and the identified mesh description. Different partitions of the workload (also referred to as work groups) may be assigned to the processing devices 118 based on, for example, the capabilities, latencies, bandwidth, and/or other mesh description of the processing devices indicative of a suitably performant device group for the workload partition. Communication requirements, strategy, or plan may also be identified for the partitions. In this regard, the communication map generator 214 may be configured to identify the processing device 118 that is to perform a computation or workload partition, the data that is to be communicated, where (e.g., to which processing device) to communicate the data, how to communicate the data, and/or the like. The communication strategy may be generated for one or more (e.g., each) computation or operation identified by the compiler 112.

In some embodiments, the optimization engine 216 may be configured to generate or modify the communication map to reduce communication overhead (e.g., an amount and/or length of communication) between the processing devices 118. In some embodiments, the optimization engine 216 may identify a communication overhead associated with the generated communication map, and alter the partitions and/or communication strategy based on the communication overhead being above a threshold. In some embodiments, the communication overhead is identified using the parameter values defined in the mesh-descriptor. With this information, the optimization engine 216 can estimate in advance the latency/cost of a given data transfer between two node groups.

In some embodiments the optimization engine 216 is configured to optimize (maximize/minimize) a given objective function. The objective function may be associated with a single variable metric such as energy, latency, and/or the like, or a multi-variate function that combines multiple optimization targets. In the latter case, the optimization engine 216 may find multiple solutions that satisfy the search criteria (characterized by a Pareto frontier).

In some embodiments, the communication map generator 212 and/or optimization engine 216 generates a first communication map with a first partition and/or communication strategy, and generates a second communication map with a second partition and/or communication strategy. The optimization engine 216 may compute communication overheads for the first communication map and the second communication map, and compare the communication overheads against each other. The optimization engine 216 may select a communication map that results in a lower communication overhead (e.g., by calculating heuristrics). The optimization engine 216 may output the selected communication map 206. In some embodiments, the optimized communication map 206 identifies the processing device 118 that is to perform a computation or workload partition, and the communication plan associated with the computation or partitions.

In some embodiments, a Comm-IR generator 218 included in the compiler 112 takes the optimized computation graph 204 and the optimized communication map 206, and generates a data structure 220 (e.g., a communication-aware program intermediate representation, referred to as a Comm-IR data structure) of the source program 204. The data structure 200 may be represented, for example, as a communication-aware operation graph. The term Comm-IR data structure and communication-aware operation graph are used interchangeably herein. In some embodiments, the communication-aware operation graph adds to the optimized computation graph, one or more communication primitives or instructions for executing the identified communication strategies. In this regard, the Comm-IR data structure 220 may intermix compute and communication instructions.

In some embodiments, the communication primitives included in the Comm-IR data structure 220 are abstracted, high-level, hardware agnostic instructions for allowing communication of information between one processing device 118 to another. The primitives may include, for example, a "receive" or "send" command for receiving or sending data from or to a source or destination processing device. The primitives may also include a "reduce" command to merge or aggregate data from one or a group of sources or destinations, a "broadcast" command to transmit information to a group of processing devices, and/or the like. The communication command may include one or more parameters such as, for example, a source node identifier (ID), destination node ID, node group ID, pointer to data to be communicated, and/or the like.

In some embodiments, the generating of the Comm-IR data structure 220 includes performing conversions of the intermediate representations 210 into a uniform, communication-aware representation. The conversion may include, for example, a conversion of data types from a native datatype used in a computation, to the communication-aware datatype to be included in the Comm-IR data structure 220. For example, an integer datatype natively represented as "INT" in the computation may be converted to a communication-aware integer type "COMM_INTEGER" (Similar to MPI_ data types defined in MPI specification). This allows uniform data representation across heterogeneous device clusters 118 and their attached heterogeneous memory systems 120.

The Comm-IR data structure 220 may be provided to the code generator 222 for translating the intermediate representations of the computation and communication operations, into a machine-readable and executable code (e.g., a communication enabled binary code). In some embodiments, code is generated for one or more computations (e.g., each computation) in the Comm-IR data structure 220. The generated code may depend, for example, on the type of processing device 118. For example, different instruction sets, links to external runtime code, and/or package binaries may need to be included depending on the type of processing device 118 that is to execute the computation and/or communication. For example, the executable instructions or code may include a runtime call, driver call, or a native instruction that is specific to the hardware configuration of the processing device.

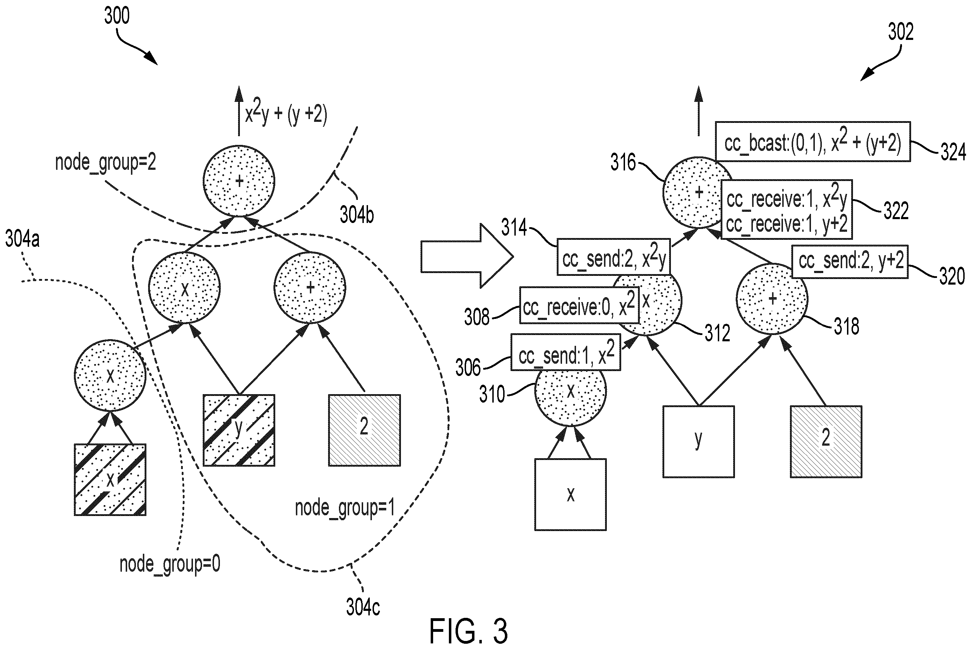

FIG. 3 depicts an example input operation graph 300 representing an input source program 204, and an example communication-aware operation graph 302 representing the Comm-IR data structure, according to one or more embodiments. In some embodiments, the communication scheduler 202 partitions the workload or computations depicted in the operation graph 300 into one or more partitions 304a-304c (collectively referenced as 304) of workloads or computations to be performed. In some embodiments, the partitions or work groups are generated so as to minimize communication overhead between the processing devices 118. The partitioned workload may be assigned to one or more processing devices 118 based on the runtime mesh description of the processing devices. The processing devices may be identified by a node or node group ID such as node_group = 0, node_group = 1, and node_group = 2.

In some embodiments, the Comm-IR generator 218 generates one or more communication primitives 306, 308 based on the communication requirements of the identified computations and generated partitions 304. The communication requirement may be defined by the producer-consumer relationship for a given data element. For instance, if node_group_0 produces a value that node_group_1 needs to consume at a later point in time, there is a data dependency (e.g., a requirement for communication) from node_group_0 to node_group_1 with respect to the said data element. For example, a "send" primitive 306 to send a computing result 310 (x*x) to node group ID 1 may be generated and associated with node group ID 0. A "receive" primitive to receive the computing result 310 from node group ID 0 may also be generated and associated with node group ID 1. Node group ID 1 may further perform a multiplication computation 312 of the computing result 310 (x*x) with another value (y), and transmit the results of the computation (x²y) to an addition computation 316 using another "send" primitive 314. An addition computation 318 may also be performed by node group ID 1 to add value y with the value 2, and results of the computation (y + 2) may be transmitted to the addition computation 316 using a "send" primitive 320. The addition computation 316 may receive the computing results of the multiplication computation 312 and the addition computation 318 via "receive" primitives 322, and generate a final output 324 (x²y + (y+2)).

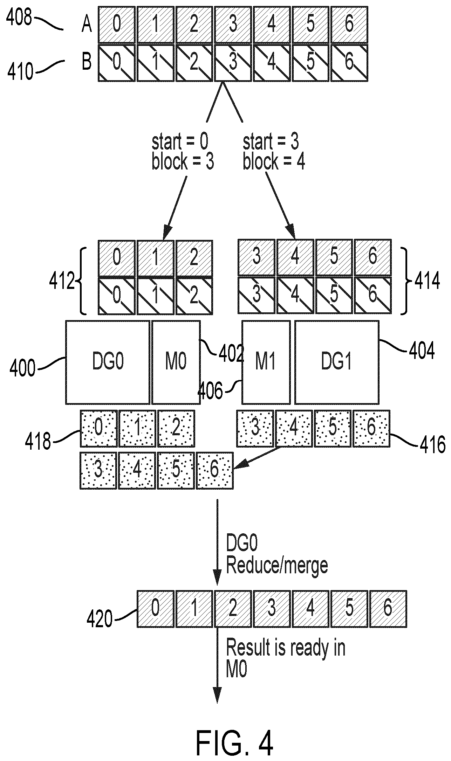

FIG. 4 depicts an example communication-aware operation graph that may be generated by the compiler 112 according to one or more embodiments. In the example of FIG. 4 the communication scheduler 202 identifies a computation is to be performed using vector A 408 and vector B 410. The communication scheduler 202 determines, based on the runtime mesh information of a first processing device 400 and a second processing device 404, and associated first and second memories 402, 406, and the computation that is to be performed, that the first processing device 400 is to perform a partial computation using the first three elements of vectors A and B 408, 410, while the second processing device 404 is to perform a partial computation using the last four elements of vectors A and B. The allocation of the work to the first and second processing devices 400, 404 in this example is therefore uneven.

Results of the computation 416 by the second processing device 404 is communicated to the first processing device 400 (e.g., via "send" and "receive" primitives). The first processing device 400 reduces or merges the received results with results 418 of its own computation. A merged or reduced result 420 is output by the first processing device 400 and stored in the first memory 402.

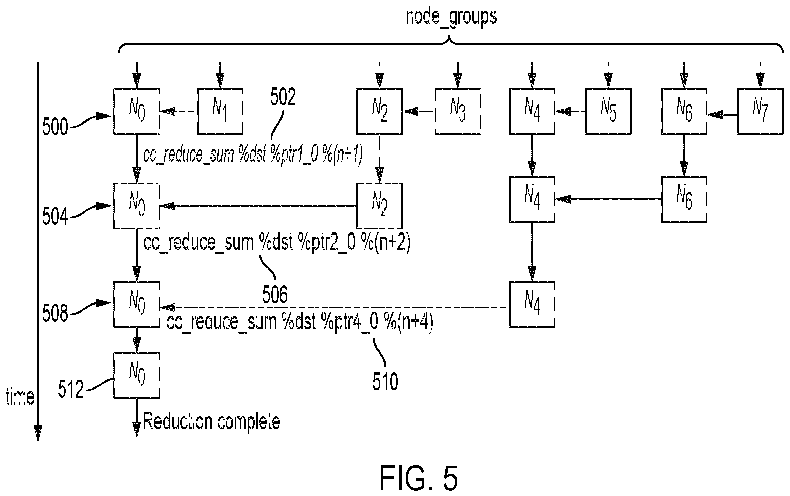

FIG. 5 depicts an example communication-aware operation graph that may be generated by the compiler 112 according to one or more embodiments. The communication scheduler 202 may assign different stages of computations to the nodes (e.g., processing devices 118) and identify a communication strategy that is aimed to reduce communication overhead.

In the example of FIG. 5, the communication scheduler 202 assigns first partial computations to nodes 0-7 during a first stage 500 of computation, and schedules communication of the results of the first partial computations by every-other node (e.g., node 1, node 3, node 5, and node 7), to its immediate neighbor node (e.g., node 0, node 2, node 4, and node 6), which reduces or merges the received results with its own results via a "reduce" primitive 502.

The communication scheduler 202 further assigns second partial computations to node 0, node 2, node 4, and node 6 during a second stage 504 of computation, and schedules communication of the results of the second partial computations from node 2 and node 6 for being reduced or merged with the results of the second partial computations from node 0 and node 4, respectively, via a "reduce" primitive 506.

In a third stage 508 of computation, node 0 and node 4 engage in third partial computations. Node 0 receives and merges results from node 4 with its own results via a "reduce" primitive 510. Node 0 outputs the final reduced result in stage 512.

As shown in FIG. 5, Comm-IR generated for each node group may contain varying amounts of work based on the communication map, and therefore, the communication-aware binaries generated for each node group and/or device are heterogeneous in nature.

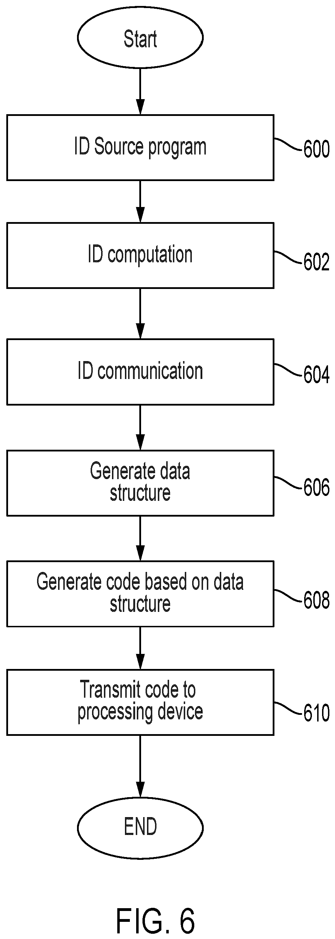

FIG. 6 depicts a flow diagram of a process for generating a Comm-IR data structure and associated executable code according to one or more embodiments. The process starts, and in act 600, the compiler 112 identifies a source program (e.g. source program 204). The source program may be represented via a graph.

In act 602, the compiler 112 (e.g., the compute analyzer 200 and/or communication scheduler 202) identifies computations or a workload described in the program. In some embodiments, the compiler 112 partitions the graph representing the source program into a first work group and a second work group. The first work group may be associated with a first computation and the second work group may be associated with a second computation.

In act 604, the compiler 112 (e.g., the communication scheduler 202) identifies a communication operation associated with the computation. In this regard, the communication scheduler 202 may identify the type of communication, data that is to be communicated, and the source and destination processing devices to engage in the communication. The communication operation may include, for example, receiving a result of the computation, sending the result of the computation, or merging the result of the computation with other data.

In act 606, the compiler 112 generates a data structure (e.g., a Comm-IR data structure) based on the identified computation and communication operation. The data structure may be represented as a graph. In some embodiments, the data structure includes a representation of the source program (e.g., an optimized computation graph) generated by the compute analyzer 200, along with communication requirements of the computations for the optimized computation graph.

In some embodiments, the compiler 112 computes a communication overhead associated with computation and/or communication operation, and alters the partitions and/or communication operations based on the computed communication overhead. In this regard, the compiler may be configured to generate a data structure that is aimed to minimize the communication overhead.

In act 608, the compiler 112 (e.g., code generator 222) generates a machine-readable code based on the data structure. In some embodiments, the generated machine-readable code may depend on the architecture of the processing device 118 that is to engage in the computation and/or communication. For example, the generated machine-readable code for one processing device may include a first runtime call, driver call, or native instructions, and the generated machine-readable code for a second processing device may include a different runtime call, driver call, or native instructions

In act 610, the compiler 112 transmits the code to the processing device 118 assigned to perform the computation and/or communication operation. In some embodiment, the host scheduler 116 launches the executable code to the appropriate processing device 118 via the runtime unification layer 125. The runtime unification layer 125 may allow the scheduler to launch the executable code in a uniform manner regardless of the architecture of the processing device that is to execute the code. In this manner, the complexities of the communication with the processing device 118, including the specific functions to call to launch the code, may be handled by the uniform unification layer 126.

As a person of skill in the art should appreciate, embodiments of the present disclosure remove the need for an outside CCL library or CC kernels to implement the communication primitives. The host also need not schedule the CC kernels separately from the compute kernels. The scope of the computations may also not be limited to the CC kernels that may be defined (e.g., pre-defined) by the outside CCL library. In some embodiments, existing and standardized communication interfaces (e.g., CXL interconnects) may be leveraged for implementing the communication between the processing devices without the need of any hardware alterations. Embodiments of the present disclosure may also extend to over-the-network distributed systems outside of the context of CXL interconnects. In some embodiments, the compiler-driven workload and communication management may ensure opportunities for adaptive optimization based on current/available compute and memory resources.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. registers, cache, memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for performing computation and communication via one or more processing devices have been specifically described and illustrated herein, many modifications and variations will be apparent to those skilled in the art. Accordingly, it is to be understood that systems and methods for performing computation and communication via one or more processing devices constructed according to principles of this disclosure may be embodied other than as specifically described herein. The disclosure is also defined in the following claims, and equivalents thereof.

The systems and methods for performing computation and communication via one or more processing devices may contain one or more combination of features set forth in the below statements.

Statement 1: A system comprising: a first processing device; a computing device including a processor and a memory, wherein the memory stores instructions that, when executed by the processor, cause the processor to: identify a source program; identify a first computation identified in the source program; identify a first communication operation associated with the first computation; generate a data structure based on the first computation and the first communication operation; generate a machine-readable code based on the data structure; and transmit the machine-readable code for performing at least one of the first computation or the first communication operation by the first processing device.

Statement 2: The system of Statement 1, wherein the first communication operation includes at least one of receiving a result of the first computation, sending the result of the first computation, or merging the result of the first computation with other data.

Statement 3. The system of Statement 1, wherein the data structure includes a representation of the source program generated by a compiler.

Statement 4. The system of Statement 3, wherein the data structure is represented as a graph.

Statement 5. The system of Statement 1, wherein the source program is represented as a graph, and the instructions further cause the processor to: partition the graph into a first work group and a second work group, wherein the first computation is included in the first work group; and assign the first computation to the first processing device.

Statement 6. The system of Statement 5, wherein the instructions that cause the processor to partition the graph include instructions that cause the processor to identify a communication overhead associated with at least the first work group.

Statement 7. The system of Statement 5 further comprising a second processing device, wherein the instructions further cause the processor to: identify the second processing device, wherein the first communication operation includes an operation for receiving communication from the first processing device about the first communication operation.

Statement 8. The system of Statement 1, wherein the instructions further cause the processor to: identify configuration information associated with the first processing device; and assign the first computation to the first processing device based on the configuration information.

Statement 9. The system of Statement 8, wherein the configuration information includes at least one of a number of processing elements, connection topology of the processing elements, interconnect type, interconnect bandwidth, or memory capacity associated with the first processing device.

Statement 10. The system of Statement 1, wherein the data structure identifies at least one of a communication dependency or synchronization point.

Statement 11. A method comprising: identifying a source program; identifying a first computation identified in the source program; identifying a first communication operation associated with the first computation; generating a data structure based on the first computation and the first communication operation; generating a machine-readable code based on the data structure; and transmitting the machine-readable code for performing at least one of the first computation or the first communication operation by a first processing device.

Statement 12. The method of Statement 11, wherein the first communication operation includes at least one of receiving a result of the first computation, sending the result of the first computation, or merging the result of the first computation with other data.

Statement 13. The method of Statement 11, wherein the data structure includes a representation of the source program generated by a compiler.

Statement 14. The method of Statement 13, wherein the data structure is represented as a graph.

Statement 15. The method of Statement 11, wherein the source program is represented as a graph, and the method further comprises: partitioning the graph into a first work group and a second work group, wherein the first computation is included in the first work group; and assigning the first computation to the first processing device.

Statement 16. The method of Statement 15 wherein the partitioning of the graph includes identifying a communication overhead associated with at least the first work group.

Statement 17. The method of Statement 15 further comprising: identifying a second processing device, wherein the first communication operation includes an operation for receiving communication from the first processing device about the first communication operation.

Statement 18. The method of Statement 11 further comprising: identifying configuration information associated with the first processing device; and assigning the first computation to the first processing device based on the configuration information.

Statement 19. The method of Statement 18, wherein the configuration information includes at least one of a number of processing elements, connection topology of the processing elements, interconnect type, interconnect bandwidth, or memory capacity associated with the first processing device.

Statement 20. The method of Statement 11, wherein the data structure identifies at least one of a communication dependency or synchronization point.

## Claims

1. A system comprising:
a first processing device; and
a computing device including a processor and a memory, wherein the memory stores instructions that, when executed by the processor, cause the processor to:
identify a source program;
identify a first computation identified in the source program;
identify a first communication operation associated with the first computation;
generate a data structure based on the first computation and the first communication operation;
generate a machine-readable code based on the data structure; and
transmit the machine-readable code for performing at least one of the first computation or the first communication operation by the first processing device.

2. The system of claim 1, wherein the first communication operation includes at least one of receiving a result of the first computation, sending the result of the first computation, or merging the result of the first computation with other data.

3. The system of claim 1 or 2, wherein the data structure includes a representation of the source program generated by a compiler.

4. The system of claim 3, wherein the data structure is represented as a graph.

5. The system of any one of claims 1 to 3, wherein the source program is represented as a graph, and the instructions further cause the processor to:
partition the graph into a first work group and a second work group, wherein the first computation is included in the first work group; and
assign the first computation to the first processing device.

6. The system of claim 5, wherein the instructions that cause the processor to partition the graph include instructions that cause the processor to identify a communication overhead associated with at least the first work group.

7. The system of any one of claims 1 to 6, further comprising a second processing device, wherein the instructions further cause the processor to:
identify the second processing device, wherein the first communication operation includes an operation for receiving communication from the first processing device about the first communication operation.

8. The system of any one of claims 1 to 7, wherein the instructions further cause the processor to:
identify configuration information associated with the first processing device; and
assign the first computation to the first processing device based on the configuration information.

9. The system of claim 8, wherein the configuration information includes at least one of a number of processing elements, connection topology of the processing elements, interconnect type, interconnect bandwidth, or memory capacity associated with the first processing device.

10. The system of any one of claims 1 to 9, wherein the data structure identifies at least one of a communication dependency or synchronization point.

11. A method comprising:
identifying a source program;
identifying a first computation identified in the source program;
identifying a first communication operation associated with the first computation;
generating a data structure based on the first computation and the first communication operation;
generating a machine-readable code based on the data structure; and
transmitting the machine-readable code for performing at least one of the first computation or the first communication operation by a first processing device.

12. The method of claim 11, wherein the first communication operation includes at least one of receiving a result of the first computation, sending the result of the first computation, or merging the result of the first computation with other data.

13. The method of claim 11 or 12, wherein the data structure includes a representation of the source program generated by a compiler.

14. The method of claim 13, wherein the data structure is represented as a graph.

15. The method of any one of claims 11 to 13, wherein the source program is represented as a graph, and the method further comprises:
partitioning the graph into a first work group and a second work group, wherein the first computation is included in the first work group; and
assigning the first computation to the first processing device.
